# EUROPEAN PATENT APPLICATION

(11) **EP 1 439 368 A1**
(43) Date of publication of application: **21.07.2004**
(21) Application number: 02777948.7
(22) Date of filing: 24.10.2002
(51) Int. Cl.: F28F 19/04, H01M 8/04, H01M 8/06

(54) **HEAT EXCHANGER,METHOD FOR FLUORINATION OF THE HEAT EXCHANGER OR COMPONENT MEMBERS THEREOF,AND METHOD OF MANUFACTURING THE HEAT EXCHANGER**

(30) Priority: 25.10.2001 JP 2001328184; 20.12.2001 US 341249 P
(71) Applicant: SHOWA DENKO K.K., Tokyo 105-8518 (JP)
(72) Inventor: TADA, Kiyoshi; c/o Oyama Regional Office, Oyama-shi, Tochigi 323-0811 (JP); OHIRA, Yoshitaka; c/o Oyama Regional Office, Oyama-shi, Tochigi 323-0811 (JP); USUI, Tadashi; c/o Oyama Regional Office, Oyama-shi, Tochigi 323-0811 (JP); NAKATA, Yoshinori; c/o Oyama Regional Office, Oyama-shi, Tochigi 323-0811 (JP); NAKAGAWA, Shintaro; c/o Oyama Regional Office, Oyama-shi, Tochigi 323-0811 (JP); WAKABAYASHI, Nobuhiro; c/o Oyama Regional Office, Oyama-shi, Tochigi 323-0811 (JP); OHASHI, Tadao, Tochigi-shi, Tochigi 328-0042 (JP)
(74) Representative: Viering, Jentschura & Partner
(86) International application number: PCT/JP2002/011051
(87) International publication number: WO 2003/036216

(57) **Abstract**

The heat exchanger according to the present invention includes a heat exchanger component in which a fluoride layer 10 is formed at the surface layer portion. It is preferable that the fluoride layer 10 falls within the range of from 2 nm to 10 *µ*m in thickness. It is preferable that the component is at least one of a fin and a plate. Furthermore, it is preferable that the fluoride layer 10 is formed on a substrate via an intermediate layer 2. It is preferable that the intermediate layer 2 includes an anodized oxide layer 3 and/or a nickel plated layer 4. The heat exchanger is excellent in corrosion resistance against water, vapor and the like. The heat exchanger is preferably used, especially, for a fuel cell.

## Description

Priority is claimed to Japanese Patent Application No. 2001-328184, filed on October 25, 2001 and U.S. Provisional Patent Application No. 60/341,249, filed on December 20, 2001, the disclosure of which are incorporated by reference in their entireties.

### Field of the Invention

The present invention relates to a heat exchanger to be used as, for example, an evaporator, a condenser, a radiator or an oil cooler, a method of fluorinating a heat exchanger or its components and a method of manufacturing a heat exchanger. More specifically, the present invention relates to a heat exchanger preferably used as a heat exchanger using water (especially, hot water of room temperature to 100 °C or hot water containing long-life coolant of 80 to 150 °C) as heat medium, a heat exchanger preferably used especially for a heat exchanger under a water environment, a vapor environment, a fuel-cell gas environment or the like, a method of fluorinating a heat exchanger or its components and a method of manufacturing a heat exchanger.

### Background Art

Metallic materials have been used as materials of heat exchangers for automobiles, etc. from a long time ago because it generally has characteristics such as an easy-to-work characteristic and high thermal conductivity. Due to its insufficient corrosion resistance, however, various cases in which heat exchangers lost their function due to the corrosion from the surface thereof that caused penetration in sort time were reported.

As the countermeasures thereof, various anti-corrosion processings are conventionally conducted to a heat exchanger or the surfaces of the components. For example, a formation of chemical conversion coating on a surface of a heat exchanger or its components was performed as corrosion resistance processing.

Furthermore, recently, in order to improve the corrosion resistance, various improvements are made to the aforementioned corrosion resistance processing. For example, according to Japanese Patent No. 2,076,381 (Japanese Examined Laid-open Patent Publication No. H7-109355), in a fin-tube type heat exchanger, after conducting chemical conversion treatment on the surfaces of the fins and the tubes, the treated fins and tubes are immersed in a mixed water solution of polyvinyl pyrrolidone and potassium silicate, thereby improving the corrosion resistance (see Patent Document No. 1).

### [Patent Document No. 1]

Japanese Examined Laid-open Patent Application No. 7-109355 (see pages 2-5, Fig. 6)

However, according to the aforementioned corrosion resistance processing method, a metallic oxide layer is formed on a surface of a heat exchanger or its components. However, since the metallic oxide layer is poor against water, especially hot water of a room temperature to 100 °C , the conventional corrosion resistance processing method was poor in reliability against water.

Especially, in recent years, in a heat exchanger for a fuel cell, it has been desired that a corrosion resistance processing method excellent in reliability against water, vapor and a fuel gas of a fuel cell is developed.

The present invention was made in view of the aforementioned technical background, and aims to provide a heat exchanger excellent in corrosion resistance, a method of fluorinating a heat exchanger or its components and a method of manufacturing a heat exchanger.

Another object of the present invention will be apparent from the following detailed embodiments of the present invention.

### DISCLOSURE OF THE INVENTION

The present invention provides the following means:
(1) A heat exchanger including a heat exchanger component having a surface layer portion in which a fluoride layer is formed.
(2) The heat exchanger as recited in the aforementioned item (1), wherein a thickness of the fluoride layer falls within the range of from 2 nm to 10 µm.
(3) The heat exchanger as recited in the aforementioned item (1) , wherein the heat exchanger is a fin-plate type heat exchanger, and wherein the component is at least one of a fin and a plate.
(4) The heat exchanger as recited in the aforementioned item (1), wherein the heat exchanger uses water as heat medium.
(5) The heat exchanger as recited in the aforementioned item (1) , wherein the heat exchanger is used under a water environment, a vapor environment, or a fuel gas environment of a fuel cell.
(6) The heat exchanger as recited in the aforementioned item (1), wherein a layer containing catalyst is formed on a surface of the fluoride layer.
(7) The heat exchanger as recited in the aforementioned item (1), wherein the heat exchanger is for use in a fuel cell.
(8) The heat exchanger as recited in the aforementioned item (1), wherein the heat exchanger is a fin-plate type heat exchanger for a fuel cell to be used under a fuel gas environment of a fuel cell, and wherein a layer containing catalyst for accelerating a reaction of carbon monoxide included in the fuel gas and oxygen.
(9) The heat exchanger as recited in the aforementioned item (1), wherein a substrate of the component is substantially made of aluminum or its alloy.
(10) The heat exchanger as recited in the aforementioned item (1), wherein the fluoride layer is formed on a surface of the substrate of the component.
(11) The heat exchanger as recited in the aforementioned item (10) , wherein the fluoride layer is substantially made of fluoride generated by performing fluorination processing of the surface of the substrate.
(12) The heat exchanger as recited in the aforementioned item (1), wherein the fluoride layer is formed on a surface of an intermediate layer formed on a surface of the substrate of the component.
(13) The heat exchanger as recited in the aforementioned item (12) , wherein the fluoride layer is substantially made of fluoride generated by performing fluorination processing of the surface of the intermediate layer.
(14) The heat exchanger as recited in the aforementioned item (12) or (13), wherein the intermediate layer includes a layer which is substantially made of oxide generated by performing forcible oxidation of the surface of the substrate.
(15) The heat exchanger as recited in aforementioned item (12) or (13) , wherein the intermediate layer includes an anodized oxide layer formed by anodizing the surface of the substrate.
(16) The heat exchanger as recited in the aforementioned item (1), wherein the fluoride layer is formed on a surface of an anodized oxide layer formed by anodizing a surface of a substrate of the component and substantially made of fluoride generated by performing fluorination processing of the surface of the anodized oxide layer.
(17) The heat exchanger as recited in the aforementioned item (1), wherein the fluoride layer is formed on a surface of a plated layer containing nickel formed on a surface of a substrate of the component and substantially made of fluoride generated by performing fluorination processing of the surface of the plated layer.
(18) The heat exchanger as recited in the aforementioned item (17), wherein the plated layer is substantially made of an electroless nickel plating.
(19) The heat exchanger as recited in the aforementioned item (17), wherein the plated layer is substantially made of electroless nickel-phosphorus alloy plating.
(20) The heat exchanger as recited in the aforementioned item (1) , wherein the fluoride layer is formed on a surface of the plated layer constituting an intermediate layer including an anodized oxide layer formed by anodizing the surface of the substrate of the component and the plated layer formed on a surface of the anodized oxide layer and containing nickel, and substantially made of fluoride generated by performing fluorination processing of the surface of the plated layer.
(21) The heat exchanger as recited in the aforementioned item (20) , wherein the plated layer is substantially made of electroless nickel plating.
(22) The heat exchanger as recited in the aforementioned item (20), wherein the plated layer is substantially made of electroless nickel-phosphorus alloy plating.
(23) A method of f luorinating a heat exchanger or its component, comprising:
   heating a heat exchanger or its component in an atmosphere containing a fluorination processing gas to thereby form a fluoride layer in a surface layer portion of the heat exchanger or its component.
(24) The method of fluorinating a heat exchanger or its component as recited in the aforementioned item (23), wherein the fluorination processing gas is at least one gas selected from the group consisting of a fluorine gas, a chlorine trifluoride gas and a nitrogen fluoride gas, wherein an inert gas is used as a base gas of the atmosphere, and wherein concentration of the fluorine gas or that of the fluoride gas is set so as to fall within the range of from 5 to 80 mass%.
(25) The method of fluorinating a heat exchanger or its component as recited in the aforementioned item (24), wherein the concentration of the fluorine gas or that of the fluoride gas is set so as to fall within the range of from 10 to 60 mass%.
(26) The method of fluorinating a heat exchanger or its component as recited in the aforementioned item (23), wherein the heating is performed under heat processing conditions that a holding temperature is 100 °C or more and a holding time is 5 hours or more.
(27) A method of fluorinating a heat exchanger or its component, comprising:
   implanting an ionized fluorine into at least a part of a surface of a heat exchanger or its component to thereby form a fluoride layer on a surface layer portion of the heat exchanger or its component.
(28) A method of manufacturing a heat exchanger, comprising:
   a heating step for heating a heat exchanger component in an atmosphere containing a fluorination processing gas; and
   a fixing step for fixing the component processed by the heating step to a predetermined position of the heat exchanger.
(29) The method of manufacturing a heat exchanger as recited in the aforementioned item (28), further comprising a catalyst containing layer forming step for forming a layer containing catalyst on a surface of the component processed by the heating step.
(30) A method of manufacturing a heat exchanger, comprising:
   a fluorine implanting step for implanting an ionized fluorine into at least a part of a surface of a heat exchanger component; and
   a fixing step for fixing the component processed by the fluorine implanting step to a predetermined position of the heat exchanger.
(31) The method of manufacturing a heat exchanger according to the aforementioned item (30), further comprising a catalyst containing layer forming step for forming a layer containing catalyst on a portion of the surface of the component processed by the fluorine implanting step to which the fluorine is implanted.
(32) A method of manufacturing a heat exchanger, comprising:
   a heating step for heating a heat exchanger assembly in an atmosphere containing a fluorination processing gas, wherein the heat exchanger assembly is formed by assembling a plurality of heat exchanger components and integrally brazing the plurality of heat exchanger components in an assembled state.
(33) The method of manufacturing a heat exchanger as recited in the aforementioned item (32), further comprising a catalyst containing layer forming step for forming a layer containing catalyst on a surface of the assembly processed by the heating step.
(34) A method of manufacturing a heat exchanger, comprising:
   a fluorine implanting step for implanting an ionized fluorine into at least a part of a surface of a heat exchanger assembly, wherein the heat exchanger assembly is formed by assembling a plurality of heat exchanger components and integrally brazing the plurality of heat exchanger components in an assembled state.
(35) The method of manufacturing a heat exchanger as recited in the aforementioned item (34), further comprising a catalyst containing layer forming step for forming a layer containing catalyst on a portion of the surface of the assembly processed by the fluorine implanting step to which the fluorine is implanted.

Next, each of the above inventions will be explained.

According to the aforementioned invention (1), since a fluoride is generally low in thermodynamic free energy and the fluoride layer is formed on the surface layer portion of the heat exchanger component, the component can have a layer thermodynamically stable on the surface layer portion and therefore becomes excellent in corrosion resistance. Furthermore, the adhesion to the layer containing the catalyst (hereinafter referred to as "catalyst containing layer") which will be mentioned later is improved. This prevents an exfoliation of the catalyst containing layer assuredly.

In the present invention, the "fluoride layer" means a layer which is substantially made of fluoride. Furthermore, in the present invention, the "surface layer portion" of the component on which the fluoride layer is formed includes the surface of the component. Furthermore, as the component, a metallic component can be exemplified.

According to the aforementioned invention (2), the reason why the thickness of the fluoride layer is set to fall within the range of from 2 nm to 10 µm is as follows. That is, if the thickness of the fluoride layer is less than 2 nm, it cannot function as a corrosion processed layer against water (especially against hot water). As a result, corrosion occurs in a relatively short time period. On the other hand, if the thickness of the fluoride layer exceeds 10 µm, although it may function enough against a corrosion processed layer against water (especially against hot water), it takes a considerable time to form the fluoride layer. As a result, the cost for manufacturing the heat exchanger increases. Accordingly, it is preferable that the thickness of the fluoride layer falls within the range of from 2 nm to 10 µm. It is more preferable that the thickness of the fluoride layer falls within the range of from 20 nm to 3 µm.

The thickness of the fluoride layer can be measured by various methods. For example, the thickness can be easily measured by a depth profile measurement method using an XPS (X-ray Photoelectron Spectroscopy).

According to the aforementioned invention (3), generally, the fins (especially outer fins) and plates among the various components constituting a fin-plate type heat exchanger are components which are required to be excellent in corrosion resistance. Accordingly, it is preferable that the component to which a fluoride layer is formed is at least one of the fin (especially outer fins) and the plate.

According to the aforementioned invention (4), as the heat medium, especially, water (including steam), hot water of a room temperature to 100 °C or a long-life coolant of 80 to 150 °C is preferably used.

According to the aforementioned invention (5), the heat exchanger can demonstrate the extremely excellent corrosion resistance when it is used under a water environment, a vapor environment or a fuel gas environment of a fuel cell. As a fuel gas of a fuel cell, a hydrogen (H₂) gas is mainly used, and the combustion gas includes carbon monoxide (CO) gas, gasoline, alcohol (e.g., methanol), combustion gas, vapor, etc., as impurities. As a heat exchanger to be used under a fuel gas environment of a fuel gas, especially, a plate-fin type heat exchanger is preferably used. On the other hand, the fin-tube type heat exchanger can be used as a heat exchanger as a heater core.

According to the aforementioned present invention (6), the layer containing catalyst (i.e., catalyst containing layer) may be a layer essentially made of catalyst, or a layer containing catalyst and substances other than catalyst. As the catalyst, a modified catalyst of a fuel cell can be exemplified. Especially, it is preferable that the catalyst is CO selective-oxidation reaction catalyst of a CO elimination device of a fuel cell. As this CO selective-oxidation reaction catalyst, catalyst for accelerating the reaction of carbon monoxide (CO) contained in a fuel gas of a fuel cell and oxygen (O₂) (the reaction formula: CO+(1/2)O₂ → CO₂) can be exemplified. By the function of this catalyst, the reaction of the carbon monoxide (CO) and the oxygen (O₂) is accelerated, and therefore carbon dioxide (CO₂) generates efficiently. This increases the purity of the hydrogen (H₂) gas as a fuel gas. Although Cu-Zn series catalyst and zeolitic series catalyst can be exemplified as the CO selective-oxidation reaction catalyst, the catalyst is not limited to the above in the present invention.

According to the aforementioned invention (7), a heat exchanger excellent in corrosion resistance for a fuel cell can be provided.

According to the aforementioned invention (8), it is possible to provide a fin-plate type heat exchanger for a fuel cell excellent in corrosion resistance and capable of efficiently eliminating carbon monoxide (CO) contained in a fuel gas of a fuel cell.

In the heat exchanger for a fuel cell, the reasons why carbon monoxide (CO) should be eliminated from the combustion gas of the fuel cell are as follows. That is, if the carbon monoxide (CO) contained in the fuel gas of the fuel cell as an impurity is fed into the fuel cell, there are such possibilities that the performance of the fuel cell may deteriorate and that the carbon monoxide (CO) may be discharged into the atmospheric air as a harmful gas as it is. In order to eliminate the carbon monoxide (CO) from the fuel gas, the catalyst containing layer is formed on the surface of the fluoride layer. Furthermore, according to the heat exchanger for a fuel cell, it is possible to set the temperature of the fuel gas to the temperature at which the catalyst can demonstrate the function efficiently.

According to the aforementioned invention (9), since the substrate of the component is substantially made of aluminum or its alloy, the heat conductivity becomes high and the heat exchange performance of the aforementioned heat exchanger improves. Furthermore, the heat exchanger becomes light in weight.

According to the aforementioned invention (11) , in cases where the substrate of the components is substantially made of metal, the fluoride layer is substantially made of the fluoride of the metal. Concretely, in cases where the substrate of the component is substantially made of, for example, aluminum or its alloy, the fluoride layer is substantially made of aluminum fluoride or aluminum alloy fluoride.

According to the aforementioned invention (14), the layer which is substantially made of fluoride generated by performing forcible oxidation of the surface of the substrate is generally excellent in corrosion resistance. Accordingly, since the intermediate layer includes such a layer, the corrosion resistance is further improved. As the forcible oxidation processing, anodizing processing which will be explained later can be exemplified.

According to the aforementioned invention (15), since the anodized oxide layer is stable physically and chemically and the intermediate layer includes the anodized oxide layer, the corrosion resistance is further improved. The anodized oxide layer can be formed by various known anodizing processing, and the forming method is not limited in the present invention. For example, an anodized oxide layer can be formed on a surface of a component by subjecting a substrate of the component immersed in an electrolytic bath containing a predetermined acid such as sulfuric acid, oxalic acid, chromic acid or these mixed acids to anodizing processing. If necessary, the anodized oxide layer may be subjected to sealing processing.

According to the aforementioned invention (16), since the fluoride layer is substantially made of fluoride generated by performing fluorination processing of the surface of the anodized oxide layer, the corrosion resistance can be further improved.

According to the aforementioned invention (17), since a plated layer containing nickel is generally excellent in corrosion resistance and the fluoride layer is substantially made of fluoride generated by performing fluorination processing of the surface of the plated layer, the corrosion resistance can be further improved. The terminology "plated layer containing nickel" is used to mean the "layer containing nickel as a component element" and exclude the "layer containing nickel as an impurity element" . In this case, the fluoride layer is substantially made of the compound of the structure element of the plated layer and fluorine. The plated layer is formed by, for example, an electrolytic plating method or an electroless plating method. As the plated layer, a nickel plated layer, a nickel-phosphorus alloy plated layer, a nickel-tungsten alloy plated layer, a nickel-phosphorus-tungsten alloy plated layer, a nickel-boron alloy plated layer, a nickel-phosphorus-boron alloy plated layer and a nickel-copper alloy plated layer can be exemplified.

According to the aforementioned invention (18), since the plated layer is substantially made of electroless nickel plating, the corrosion resistance can be assuredly improved.

According to the aforementioned invention (19), since the plated layer is substantially made of electroless nickel-phosphorus alloy plating, the corrosion resistance can be assuredly improved.

According to the aforementioned invention (20), the corrosion resistance can be further improved. In this case, the fluoride layer is substantially made of, for example, the compound of the component element of the plated layer and fluorine. More specifically, the fluoride layer is made of, for example, nickel fluoride or nickel-phosphorus alloy fluoride.

According to the aforementioned invention (21), since the plated layer is substantially made of electroless nickel plating, the corrosion resistance can be assuredly improved.

According to the aforementioned invention (22), since the plated layer is substantially made of electroless nickel-phosphorus alloy plating, the corrosion resistance can be assuredly improved.

According to the aforementioned invention (23), the fluoride layer can be easily formed on the surface layer portion of the heat exchanger or its component. As the fluorination processing gas, a fluorine (F₂) gas or a fluoride gas (e.g., a nitrogen trifluoride (ClF₃) gas, a fluorination nitrogen (NF₃) gas) are preferably used. Furthermore, as the heating means, although various heating furnaces can be used, especially an atmospheric heating furnace is preferably used. In the fluorination method according to the invention, a heat exchanger or its component is disposed in an atmospheric heating furnace, and a gas containing a fluorination processing gas is supplied to the furnace. Then, the heat exchanger or its component is heated in the atmosphere under predetermined heating processing conditions. By this, the surface of the heat exchanger or its component reacts to the fluorination processing gas to thereby form a fluoride layer at the surface layer portion (including the surface) of the heat exchanger or its alloy.

According to the aforementioned invention (24), the reasons why the concentration of the fluorine gas or that of the fluoride gas is set so as to fall within the range of from 5 to 80 mass% are as follows. That is, if the concentration is less than 5 mass%, the fluoride layer becomes thin, which becomes difficult to obtain desired corrosion resistance. On the other hand, the more the concentration increases, the more the formation rate of the fluoride layer increases. However, if the concentration exceed 80 mass%, the formation rate of the fluoride layer does not increase so much and will be saturated. Thus, the increase of the concentration becomes meaningless, and that the manufacturing cost increases. Accordingly, it is preferable that the concentration falls within the range of from 5 to 80 mass%. Especially, it is more preferable that the concentration falls within the range of from 10 to 60 mass%. Furthermore, as the base gas, various inert gases such as a nitrogen (N₂) gas, an argon (Ar) gas and a helium (He) gas can be used. Especially, it is recommended to use a nitrogen (N₂) gas.

According to the aforementioned invention (26), the holding temperature is 100 °C or more and the holding time is 5 hours or more. The reasons are as follows. If the holding temperature is less than 100 °C or the holding time is less than 5 hours, the fluorination processing gas hardly diffuses into the heat exchanger or its component from the surface thereof. Consequently, a good fluoride layer is not formed. Accordingly, it is preferable that the holding temperature is 100 °C or more and the holding time is 5 hours or more. Especially, it is more preferable that the holding temperature is 150 °C or more and the holding time is 10 hours or more. Although the upper limit of the preferable holding time is not specifically limited, it is preferable that it is 600 °C or less. On the other hand, although the upper limit of the preferable holding time is not specifically limited, it is preferable that it is 50 hours or less. Furthermore, although the holding pressure is not specifically limited and can be set arbitrary, it is especially preferable that it falls within the range of from 0.8 x 10⁵ to 1.5 x 10⁵ Pa.

According to the aforementioned invention (27), the fluoride layer can be easily formed at the surface layer portion of the heat exchanger or its component. This fluorination processing can be easily executed by, for example, an ion-implantation method using a known ion implantation equipment. That is, fluorine is ionized with a filament in a decompressed atmosphere, and the fluorine ion is implanted into the predetermined portion of the surface of the heat exchanger or its component. By this, the fluoride layer is formed at the surface layer portion (including the surface) of the heat exchanger or its component.

According to the aforementioned invention (28), it becomes possible to obtain a heat exchanger excellent in corrosion resistance.

According to the aforementioned invention (29), it becomes possible to obtain a heat exchanger excellent in adhesion of the layer containing catalyst (i.e., catalyst containing layer). Accordingly, this heat exchanger is preferably used, especially, for a fuel cell. As the catalyst, the aforementioned CO selective-oxidation reaction catalyst of a fuel cell can be exemplified.

According to the aforementioned invention (30), it becomes possible to obtain a heat exchanger excellent in corrosion resistance.

According to the aforementioned invention (31), it becomes possible to obtain a heat exchanger excellent in adhesion of the catalyst containing layer. Accordingly, this heat exchanger is preferably used, especially, for a fuel cell. As the catalyst, the aforementioned CO selective-oxidation reaction catalyst of a fuel cell can be exemplified.

According to the aforementioned invention (32), it becomes possible to obtain a heat exchanger excellent in corrosion resistance. In general, in cases where components are brazed with each other after the formation of fluoride layer at the surface layer portion of the component, the fluoride layer may be damaged at the time of joining. However, according to the present invention, it becomes possible to prevent such a damage of the fluoride layer.

According to the aforementioned invention (33), it becomes possible to obtain a heat exchanger excellent in adhesion of the catalyst containing layer. Furthermore, the damage of the catalyst containing layer can be prevented. Accordingly, this heat exchanger is preferably used, especially, for a fuel cell. As the catalyst, the aforementioned CO selective-oxidation reaction catalyst of a fuel cell can be exemplified.

According to the aforementioned invention (34), it becomes possible to obtain a heat exchanger excellent in corrosion resistance. Furthermore, it becomes possible to prevent such a damage of the fluoride layer.

According to the aforementioned invention (35), it becomes possible to obtain a heat exchanger excellent in adhesion of the catalyst containing layer. Furthermore, the damage of the catalyst containing layer can be prevented. Accordingly, this heat exchanger is preferably used, especially, for a fuel cell. As the catalyst, the aforementioned CO selective-oxidation reaction catalyst of a fuel cell can be exemplified.

### BRIEF DESCRIPTION OF THE DRAWINGS

Fig. 1 is a perspective view showing an example of a fin-plate type heat exchanger to which the fluorination processing method according to the present invention is applied.
Fig. 2 is a cross-sectional perspective view showing a principal portion for explaining the internal structure of the heat exchanger.
Fig. 3 is an enlarged cross-sectional view showing the heat exchanger component obtained in Example 1.
Fig. 4 is an enlarged cross-sectional view showing the heat exchanger component obtained in Example 2.
Fig. 5 is an enlarged cross-sectional view showing the heat exchanger component obtained in Example 3.
Fig. 6 is an enlarged cross-sectional view showing the heat exchanger component obtained in Example 4.
Fig. 7 is an enlarged cross-sectional view showing the heat exchanger component obtained in Example 6.

### BEST MODE FOR CARRYING OUT THE PRESENT INVENTION

The present invention will be explained according to the attached drawings in order to detail the present invention.

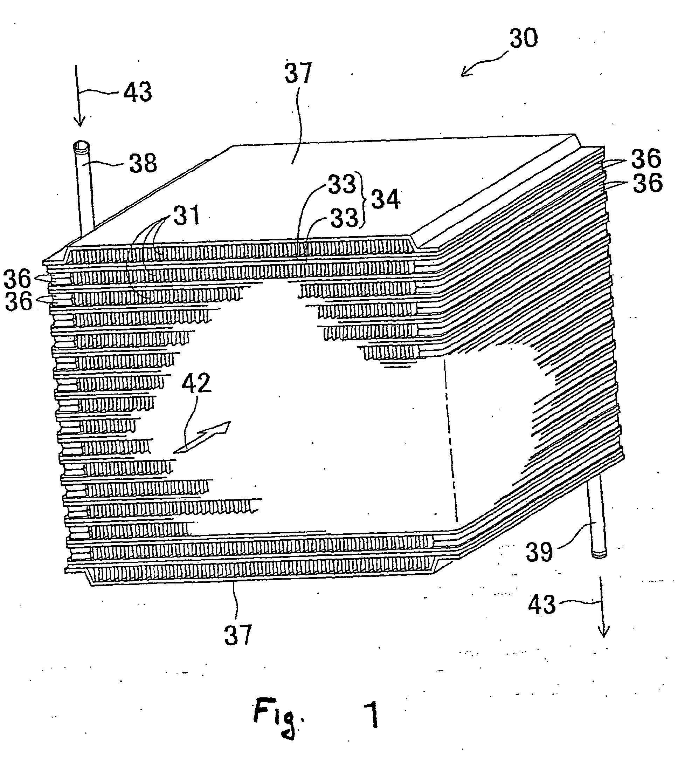

In Fig. 1, the reference numeral "30" denotes a heat exchanger as an example to which the fluorination processing method according to the present invention is applied. This heat exchanger 30 is a fin-plate type heat exchanger for a fuel cell which is used under a fuel gas environment of a fuel cell, and more specifically is used as a modification device of a fuel cell. In this figure, the reference numeral "42" denotes a fuel gas of a fuel cell, and "43" denotes heat medium. A hydrogen (H₂) gas is used as the aforementioned fuel gas 42. A refrigerant is used as the aforementioned heat medium 43. For example, a long-life coolant is used suitably.

As shown in Figs. 1 and 2, this heat exchanger 30 is provided with a plurality of plate-like tubes 34 each formed by coupling a pair of pan-like plates 33 and 33 in a face-to-face manner. The plate-like tubes 34 are stacked one on another with a corrugated outer fin 31 intervened therebetween. Each of the plate-like tubes 34 is provided with a flat heat medium passage 35 (refrigerant passage) therein as shown in Fig. 2. In this heat medium passage 35, a corrugated inner fin 32, which is a member separated from the plate 33, is disposed. Furthermore, as shown in Fig. 1, at the end portions of the adjacent plates 33 of the adjacent plate-like tubes 34, short cylindrical tank portions 36 are formed. Both the tank portions 36 and 36 are engaged with each other. Furthermore, at both sides of the plurality of plate-like tubes 34 in the stack direction, side plates 37 and 37 for protecting the outermost outer fins 31 are disposed. To one of the side plates 37, a heat medium inlet pipe (refrigerant inlet pipe) 38 is connected. To the other side plate 37, a heat medium outlet pipe (refrigerant outlet pipe) 39 is connected.

In this heat exchanger 30, the heat medium 43 is introduced into one of the tank portion groups 36 via the heat medium inlet pipe 38. And then, as shown in Fig. 2, the introduced heat medium 43 passes through the heat medium passages 35 of the plurality of plate-like tubes 34 to reach the other tank portion groups 36. Thereafter, the heat medium is discharged through the heat medium outlet pipe 39. On the other hand, the fuel gas 42 (i.e., hydrogen (H₂) gas) of a fuel cell passes through the gap 40 (hereinafter referred to as "fuel gas passage") of the adjacent plate-like tubes 34 and 34 in which the outer fin 31 is disposed. In this heat exchanger 30, heat exchange is performed between the fuel gas 42 and the heat medium 43 when the fuel gas 42 passes through the fuel gas passage 40, thereby cooling the fuel gas 42.

This heat exchanger 30 is manufactured as follows. That is, the heat exchanger assembly shown in Fig. 1 is provisionally assembled by using the outer fins 31, the inner fins 32, the plates 33 and the side plates 37. Thereafter, this provisional assembly is held and tightened using stainless jigs (not shown) and bolts-and-nuts (not shown). Then, in this assembled state, the aforementioned outer fins 31, the inner fins 32, the plates 33 and the side plates 37 are integrally brazed (i.e., vacuum brazed) in a vacuum heating furnace. Subsequently, the heat medium inlet pipe 38 and the heat medium outlet pipe 39 are joined by welding to the side plates 37 and 37 of the assembly respectively. Thus, the aforementioned heat exchanger 30 is manufactured.

In the aforementioned heat exchanger 30, the outer fins 31, the inner fins 32, the plates 33 and the like correspond to the components of the heat exchanger 30.

The method of fluorination processing according to the present invention was applied to the aforementioned heat exchanger 30. The examples are shown as follows.

### [Example 1]

In order to manufacture the aforementioned heat exchanger 30, the following outer fins 31, the inner fins 32 and the plates 33 were prepared.

The outer fin 31 and the inner fin 32 were made of a bare material (thickness: 0.1 mm) of aluminum alloy (material: JIS A3203), respectively. This bare material was the substrate of the outer fin 31 and that of the inner fin 32, respectively.

The plate 33 was made of a clad material (thickness: 0.4 mm, skin material clad rate: 15 %) in which a skin material of aluminum alloy (material: JIS A4004) was clad on both surfaces of a core material of aluminum alloy (material: JIS A3003). This clad material is the core material of the plate 33.

Thereafter, a heat exchanger assembly was provisionally assembled by using components including the outer fins 31, the inner fins 32 and the plates 33, and thereafter the outer fins 31, the inner fins 32 and the plates 33 were integrally secured while keeping the assembled state, whereby a predetermined heat exchanger assembly was manufactured. The securing was performed by brazing (brazing temperature: about 600 °C) in a vacuum heating furnace.

Subsequently, the assembly was disposed in an atmospheric heating furnace, and a gas (a base gas: nitrogen (N₂) gas) containing a fluorine (F₂) gas as a fluorination processing gas was introduced in the furnace, whereby the gas in the furnace was replaced with the gas containing a fluorine gas (F₂). The gas concentration of the fluorine in the fluorination processing gas was set to be 20 mass%. Subsequently, in this fluorination processing gas atmosphere, the aforementioned assembly was heated under the conditions of the holding temperature of 260 °C and the holding time of 24 hours (heating step). By this, both the surfaces of the outer fin 31, those of the inner fin 32 and those of the plate 33 of the assembly were fluorinated, and a fluoride layer was formed on each of the surfaces of these substrates. This fluoride layer was substantially made of the structural elements of the substrate and fluorine. More concretely, the fluoride layer was substantially made of an aluminum alloy fluoride such as aluminum fluoride.

In the obtained heat exchanger, the thickness of the fluoride layer of the outer fin 31 and that of the inner fin 32 were 0.3 µm, respectively, and the thickness of the fluoride layer of the plate 33 was 0.1 µm. The thickness of the fluoride layer was obtained by a depth profile measurement of the fluoride element with an XPS.

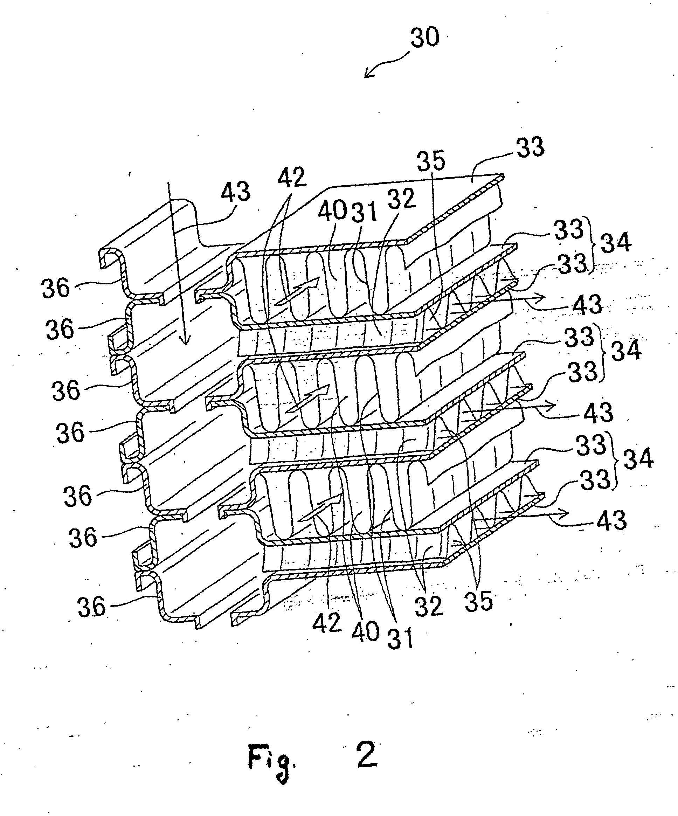

Fig. 3 is an enlarged cross-sectional view showing the component (i.e., the outer fin, the inner fin and the plate) of the heat exchanger 33 obtained in Example 1. In this figure, the reference numeral "1" is a substrate of the component, and "10" denotes a fluoride layer.

### [Example 2]

Outer fins 31, inner fins 32 and plates 33 which were similar to those in Example 1 were prepared.

Thereafter, the outer fins 31, the inner fins 32 and the plates 33 were used as components, and in the same method as in Example 1, a heat exchanger assembly in which the outer fins 31, the inner fins 32 and the plates 33 were integrally brazed was made.

Thereafter, the assembly was immersed into 15 % sulfuric-acid electrolytic bath to thereby anodize both surfaces of the outer fin 31, those of the inner fin 32 and those of the plate 33 of the assembly. Thus, a sulfuric-acid anodized oxide layer (5 µm in thickness) as an intermediate layer was formed on the surface of these substrates.

Next, this assembly was heated in a fluorination processing gas atmosphere to fluorinate both surfaces of the outer fin 31, those of the inner fin 32 and those of the plate 33 of the assembly. Thus, a fluoride layer was formed on the surface of the sulfuric-acid anodized oxide layer of each of these substrates. In this case, the fluorination processing conditions are the same as those of the aforementioned Example 1. This fluoride layer was substantially made of a compound of the structure elements of the sulfuric-acid anodized oxide layer and fluorine. More concretely, the fluoride layer was substantially made of an aluminum alloy fluoride.

In the obtained heat exchanger, the fluoride layer of the outer fin 31 and that of the inner fin 32 were 0.3 µm in thickness, respectively, and the fluoride layer of the plate 33 was 0.1 µm in thickness.

Fig. 4 is an enlarged cross-sectional view showing the structural member of the heat exchanger obtained in Example 2. In this figure, the reference numeral "1" denotes a substrate of the structural member, "3" denotes an anodized oxide layer as an intermediate layer 2, and "10" denotes a fluoride layer.

### [Example 3]

Outer fins 31, inner fins 32 and plates 33 which were similar to those in Example 1 were prepared.

Thereafter, the outer fins 31, the inner fins 32 and the plates 33 were used as components, and in the same method as in Example 1, a heat exchanger assembly in which the outer fins 31, the inner fins 32 and the plates 33 were integrally brazed was made.

Thereafter, both surfaces of the outer fin 31, those of the inner fin 32 and those of the plate 33 of the assembly were processed by a known electroless plating method, whereby an electroless nickel plated layer (5 µm in thickness) as an intermediate layer was formed on the surface of each of the substrates. The concrete steps of the electroless plating method employed here will be explained as follows. That is, the assembly was subjected to degreasing processing with a degreasing liquid of an alkali family, and then subjected to zincate processing (main ingredients: NaOH, ZnO) as pretreatment to thereby form a zinc layer on the surface of the substrate. Subsequently, the assembly was immersed in a plating bath of 90 °C including sodium hypophosphite and nickel sulfate as main ingredients, which is commercially available chemicals, to cause reactions for a predetermined time. Thus, an electroless nickel plated layer was formed on the surface of the substrate.

Next, this assembly was heated in a fluorination processing gas atmosphere to fluorinate both surfaces of the outer fin 31, those of the inner fin 32 and those of the plate 33 of the assembly. Thus, a fluoride layer was formed on the surface of the electroless nickel plated layer of each of these substrates. In this case, the fluorination processing conditions are the same as those of the aforementioned Example 1. This fluoride layer was substantially made of a compound of the structure elements of the electroless nickel plated layer and fluorine. More concretely, the fluoride layer was substantially made of fluoride of nickel such as nickel fluoride.

In the obtained heat exchanger, the fluoride layer of the outer fin 31 and that of the inner fin 32 were 4 µm in thickness, respectively, and the fluoride layer of the plate 33 was also 4 µm in thickness.

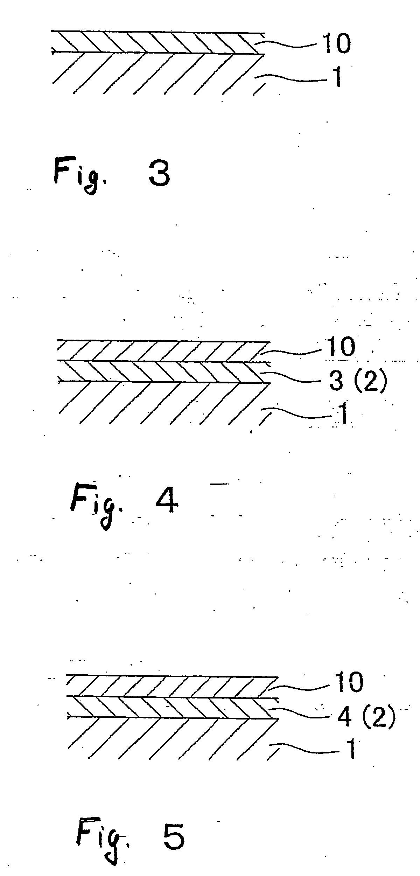

Fig. 5 is an enlarged cross-sectional view showing the structural member of the heat exchanger obtained in Example 3. In this figure, the reference numeral "1" denotes a substrate of the structural member, "4" denotes an electroless nickel plated layer as an intermediate layer 2, and "10" denotes a fluoride layer.

### [Example 4]

Outer fins 31, inner fins 32 and plates 33 which were similar to those in Example 1 were prepared.

Thereafter, the outer fins 31, the inner fins 32 and the plates 33 were used as components, and in the same method as in Example 1, a heat exchanger assembly in which the outer fins 31, the inner fins 32 and the plates 33 were integrally brazed was made.

Thereafter, the assembly was immersed into 15 % sulfuric-acid electrolytic bath to thereby anodize both surfaces of the outer fin 31, those of the inner fin 32 and those of the plate 33 of the assembly. Thus, a sulfuric-acid anodized oxide layer (5 µm in thickness) as an intermediate layer was formed on the surface of these substrates.

Thereafter, both surfaces of the outer fin 31, those of the inner fin 32 and those of the plate 33 of the assembly were processed by a known electroless plating method, whereby an electroless nickel plated layer (5 µm in thickness) as an intermediate layer was formed on the surface of each of the substrates. The concrete steps of the electroless plating method employed here were the same as in the aforementioned Example 3.

Next, this assembly was heated in a fluorination processing gas atmosphere to fluorinate both surfaces of the outer fin 31, those of the inner fin 32 and those of the plate 33 of the assembly. Thus, a fluoride layer was formed on the surface of the electroless nickel plated layer of each of these substrates. In this case, the fluorination processing conditions are the same as those of the aforementioned Example 1. This fluoride layer was substantially made of compounds of the structure elements of the electroless nickel plated layer and the fluorine. More concretely, the fluoride layer was substantially made of fluoride of nickel such as nickel fluoride.

In the obtained heat exchanger, the fluoride layer of the outer fin 31 and that of the inner fin 32 were 4 µm in thickness, respectively, and the fluoride layer of the plate 33 was also 4 µm in thickness.

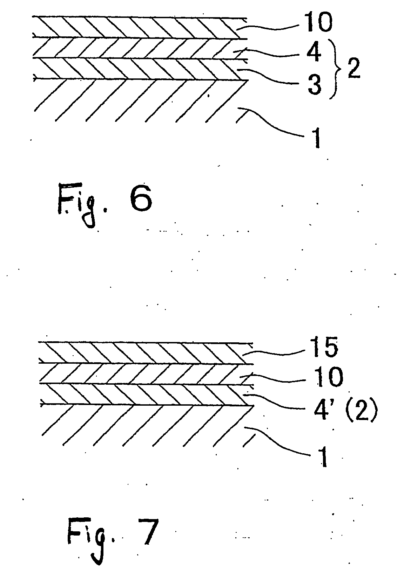

Fig. 6 is an enlarged cross-sectional view showing the structural member of the heat exchanger obtained in Example 4. In this figure, the reference numeral "1" denotes a substrate of the structural member, "3" denotes an anodized oxide layer, "4" denotes an electroless nickel plated layer and "10" denotes a fluoride layer. In this Example 4, the intermediate layer 2 is composed of the anodized oxide layer 3 and the electroless nickel plated layer 4.

### <<Corrosion resistant tests>>

In order to evaluate the corrosion resistance of the heat exchangers of Examples 1 to 4, the following plate-like test pieces (dimension: 50 x 100 mm) were prepared.

### <Test pieces 1A and 1B>

The test piece 1A was a piece in which a substrate having the same material and thickness as those of the outer fin and the inner fin was subjected to the same processing as in Example 1.

The test piece 1B was a piece in which a substrate having the same material and thickness as those of the plate was subjected to the same processing as in Example 1.

### <Test pieces 2A and 2B>

The test piece 2A was a piece in which a substrate having the same material and thickness as those of the outer fin and the inner fin was subjected to the same processing as in Example 2.

The test piece 2B was a piece in which a substrate having the same material and thickness as those of the plate was subjected to the same processing as in Example 2.

### <Test pieces 3A and 3B>

The test piece 3A was a piece in which a substrate having the same material and thickness as those of the outer fin and the inner fin was subjected to the same processing as in Example 3.

The test piece 3B was a piece in which a substrate having the same material and thickness as those of the plate was subjected to the same processing as in Example 3.

### <Test pieces 4A and 4B>

The test piece 4A was a piece in which a substrate having the same material as that of the outer fin and the inner fin was subjected to the same processing as in Example 4.

The test piece 4B was a piece in which a substrate having the same material and thickness as those of the plate was subjected to the same processing as in Example 4.

### <Test pieces 5A and 5B>

The test piece 5A was a piece in which only a sulfuric-acid anodized oxide layer was formed on a substrate having the same material and thickness as those of the outer fin and the inner fin.

The test piece 5B was a piece in which only a sulfuric-acid anodized oxide layer was formed on a substrate having the same material and thickness as those of the plate.

### <Test piece 6>

The test piece 6 was a piece in which no layer was formed on a substrate of stainless steel (material: SUS304).

The aforementioned test pieces 1A to 6 were subjected to the following corrosion test.

Each of the aforementioned test pieces 1A to 6 were subjected to the test 150 times(cycles), wherein the test includes a step of immersing each test piece 1A to 6 in a corrosion water solution (ordinary temperature) of PH=1.3 containing hydrochloric acid, sulfuric acid, nitric acid, formic acid and acetic acid, a step of holding the test piece taken out of the corrosion water solution for twenty minutes in a 200 °C high temperature furnace and a step of immersing the test piece in the corrosion water solution again after cooling it to approximately ordinary temperature. Thereafter, the decreased amount of the thickness and the decreased amount of weight due to the corrosion of each test piece was examined.

The results of the aforementioned corrosion test are shown in Table 1.

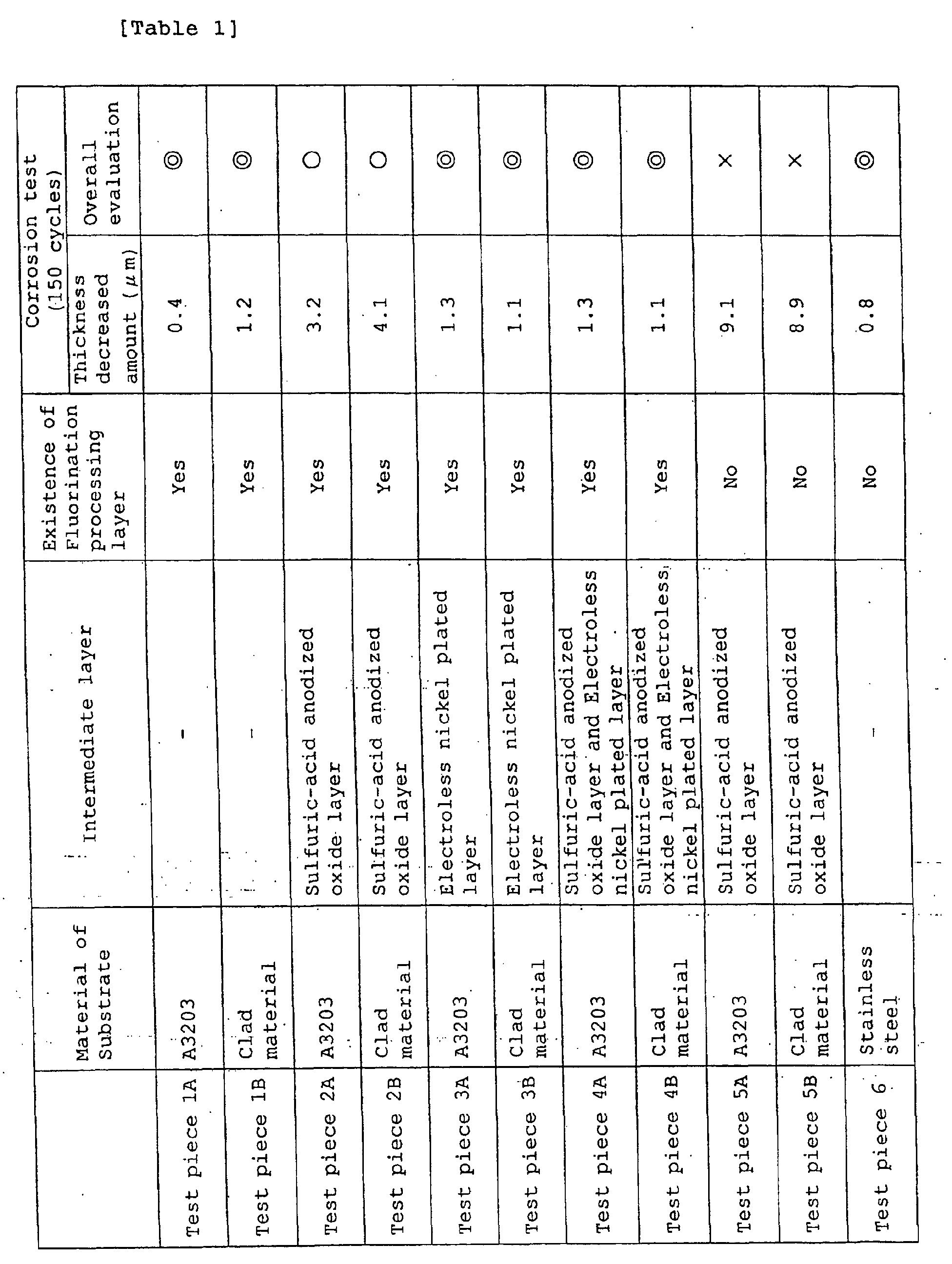

In the column of "Overall Evaluation" of the corrosion test in Table 1, "ⓞ" denotes "almost no corrosion, "○" denotes "slight corrosion," and "×" denotes "heavy corrosion."

According to the results of the corrosion tests shown in Table 1, it is confirmed that the test pieces 1A to 4B are excellent in corrosion resistance. Accordingly, it is confirmed that the heat exchanger according to Examples 1 to 4 are excellent in corrosion resistance. Especially, it is confirmed that the test pieces 1A, 1B, 3A, 3B, 4A and 4B are extremely excellent in corrosion resistance. Accordingly, it is confirmed that the heat exchanger according to Examples 1, 3 and 4 are extremely excellent in corrosion resistance.

Accordingly, the heat exchanger according to the present invention can be used for a long time period under a fuel cell gas environment in which a long time usage was used to be difficult. Furthermore, even under the water environment or vapor environment, it is possible to use the heat exchanger for a long time period. Furthermore, in cases where water is used as heat medium, the heat exchanger can be used for a long time period.

### [Example 5]

Outer fins 31, inner fins 32 and plates 33 which were similar to those in Example 1 were prepared.

Thereafter, the outer fins 31, the inner fins 32 and the plates 33 were used as components, and in the same method as in Example 1, a heat exchanger assembly in which the outer fins 31, the inner fins 32 and the plates 33 were integrally brazed was made.

Subsequently, ionized fluorine was implanted on both surfaces of the outer fin 31, the outer fin side surface of the plate 33 (fluorine implanting step). By this, a fluoride layer was formed on the surfaces of these substrates. The fluorination processing procedures by the ion implantation method will be detailed as follows. That is, ionized fluorine was implanted on the surfaces of the substrates by making the substrates negative in a fluorine gas (F₂) and performing a glow discharge with the energy of 1 MeV. By this, the surfaces of the substrates were fluorinated.

In the obtained heat exchanger, the fluoride layer of the outer fin 31 was 0.3 µm in thickness, and the fluoride layer of the plate 33 was 0.1 µm in thickness.

### [Example 6]

Outer fins 31, inner fins 32 and plates 33 which were similar to those in Example 1 were prepared.

Thereafter, the outer fins 31, the inner fins 32 and the plates 33 were used as components, and in the same method as in Example 1, a heat exchanger assembly in which the outer fins 31, the inner fins 32 and the plates 33 were integrally brazed was made.

Thereafter, both surfaces of the outer fin 31, those of the inner fin 32 and those of the plate 33 of the assembly were processed by a known electroless plating method, whereby an electroless nickel-phosphorus alloy plated layer (10 µm in thickness) as an intermediate layer was formed on the surface of each of the substrates.

Next, this assembly was heated in a fluorination processing gas atmosphere to fluorinate both surfaces of the outer fin 31, those of the inner fin 32 and those of the plate 33 of the assembly. Thus, a fluoride layer was formed on the surface of the electroless nickel-phosphorus alloy plated layer of each of these substrates. In this case, the fluorination processing conditions are the same as those of the aforementioned Example 1. This fluoride layer was substantially made of compounds of the structure elements of the electroless nickel-phosphorus alloy plated layer and the fluorine. More concretely, the fluoride layer was substantially made of a nickel-phosphorus alloy fluoride.

In the obtained heat exchanger, the fluoride layer of the outer fin 31 and that of the inner fin 32 were 0.3 µm in thickness, and the fluoride layer of the plate 33 was also 0.1 µm in thickness.

Next, on both surfaces of the outer fin 31 and the outer fin side surface of the plate 33 which were the portion to which a fuel gas (i.e., hydrogen (H₂) gas) of a fuel cell, a layer containing the aforementioned catalyst (thickness: 100 *µ*m) was formed by applying and baking CO selective-oxidation reaction catalyst thereto. The catalyst was used to promote the reaction of the carbon monoxide (CO) contained in the fuel gas of the fuel cell and oxygen (O₂).

Fig. 7 is an enlarged cross-sectional view showing the structural members (outer fin, plate) of the heat exchanger obtained in Example 6. In this figure, the reference numeral "1" denotes a substrate of the structural member, "4'" denotes an electroless nickel-phosphorus alloy plated layer as an intermediate layer 2, and "10" denotes a fluoride layer and "15" is a catalyst containing layer.

Next, in order to evaluate the corrosion resistance of the heat exchanger of Example 6, corrosion tests were performed under the same conditions as in the aforementioned <<Corrosion resistance tests>>. As a result, it is confirmed that this heat exchanger is extremely excellent in corrosion resistance.

Furthermore, in the heat exchanger of Example 6, the catalyst containing layer 15 was formed on and firmly adhered to the surface of the fluoride layer 10. Accordingly, this reveals that the heat exchanger can be used for a long time period under a fuel gas environment of a fuel cell.

Although some embodiments of the present invention are explained, the present invention is not limited to these embodiments and can be changed in various manners.

For example, the inner fin 32 and the plate 33 may be integrally formed.

Furthermore, in manufacturing a heat exchanger, structural components (outer fin, inner fin, plate, etc.) of the heat exchanger may be heated in an atmosphere containing a fluorination processing gas (heating step) to form a fluoride layer on the surface layer portion of the structural components, and then the structural components may be fixed to predetermined positions of the heat exchanger.

Furthermore, in manufacturing a heat exchanger, ionized fluorine may be implanted on the surfaces of structural components (outer fin, inner fin, plate, etc.) of the heat exchanger (fluorine implanting step) to form a fluoride layer on the surface layer portion of the structural components, and then the structural components may be fixed to predetermined positions of the heat exchanger.

As mentioned above, the present invention will be summarized as follows.

Since the heat exchanger according to the present invention includes heat exchanger structural components in which fluoride layer is formed on the surface layer portion, the heat exchanger is excellent in corrosion resistance as compared with prior heat exchangers, and can be suitably used as a heat exchanger using water as heat medium, especially a heat exchanger using hot water or water containing long-life coolant. Furthermore, the heat exchanger can also be preferably used as a heat exchanger to be used under the conditions of water environment, vapor environment or fuel gas environment of a fuel cell.

According to the method of fluorinating a heat exchanger or its components of the present invention, a fluoride layer can be easily formed on the surface layer portion of the heat exchanger or its components.

Furthermore, in cases where the concentration of the fluorine gas or that of the fluoride gas is set to fall within a predetermined range, it is possible to assuredly form a fluoride layer excellent in corrosion resistance on the surface layer portion of the heat exchanger or its components.

According to the method of manufacturing a heat exchanger of the present invention, a heat exchanger excellent in corrosion resistance can be obtained. The obtained heat exchanger can be suitably used as a heat exchanger using water as heat medium, especially a heat exchanger using hot water or water containing long-life coolant. Furthermore, the heat exchanger can also be preferably used as a heat exchanger to be used under the conditions of water environment, vapor environment or fuel gas environment of a fuel cell.

### INDUSTRIAL APPLICABILITY

The heat exchanger according to the present invention can be preferably used for, for example, an evaporator, a condenser, a radiator, an oil cooler, especially for a heat exchanger for a fuel cell.

The method of fluorinating a heat exchanger or its components can be preferably applied to a heat exchanger to be used as, for example, an evaporator, a condenser, a radiator, an oil cooler or its components, especially to a heat exchanger for a fuel cell or its components.

The method of manufacturing a heat exchanger can be preferably applied to a heat exchanger to be used as, for example, an evaporator, a condenser, a radiator, an oil cooler or its components, especially to a heat exchanger for a fuel cell.

The terms and descriptions in this specification are used only for explanatory purposes and the present invention is not limited to these, but many modifications and substitutions may be made without departing from the spirit of the scope of the present invention which is defined by the appended claims.

## Claims

1. A heat exchanger including a heat exchanger component having a surface layer portion in which a fluoride layer is formed.

2. The heat exchanger as recited in claim 1, wherein a thickness of said fluoride layer falls within the range of from 2 nm to 10 *µ*m.

3. The heat exchanger as recited in claim 1, wherein said heat exchanger is a fin-plate type heat exchanger, and wherein said component is at least one of a fin and a plate.

4. The heat exchanger as recited in claim 1, wherein said heat exchanger uses water as heat medium.

5. The heat exchanger as recited in claim 1, wherein said heat exchanger is used under a water environment, a vapor environment, or a fuel gas environment of a fuel cell.

6. The heat exchanger as recited in claim 1, wherein a layer containing catalyst is formed on a surface of said fluoride layer.

7. The heat exchanger as recited in claim 1, wherein said heat exchanger is for use in a fuel cell.

8. The heat exchanger as recited in claim 1, wherein said heat exchanger is a fin-plate type heat exchanger for a fuel cell to be used under a fuel gas environment of a fuel cell, and wherein a layer containing catalyst for accelerating a reaction of carbon monoxide contained in the fuel gas and oxygen.

9. The heat exchanger as recited in claim 1, wherein a substrate of said component is substantially made of aluminum or its alloy.

10. The heat exchanger as recited in claim 1, wherein said fluoride layer is formed on a surface of a substrate of said component.

11. The heat exchanger as recited in claim 10, wherein said fluoride layer is substantially made of fluoride generated by performing fluorination processing of said surface of said substrate.

12. The heat exchanger as recited in claim 1, wherein said fluoride layer is formed on a surface of an intermediate layer formed on a surface of a substrate of said component.

13. The heat exchanger as recited in claim 12, wherein said fluoride layer is substantially made of fluoride generated by performing fluorination processing of said surface of said intermediate layer.

14. The heat exchanger as recited in claim 12 or 13, wherein said intermediate layer includes a layer which is substantially made of oxide generated by performing forcible oxidation of said surface of said substrate.

15. The heat exchanger as recited in claim 12 or 13, wherein said intermediate layer includes an anodized oxide layer formed by anodizing said surface of said substrate.

16. The heat exchanger as recited in claim 1, wherein said fluoride layer is formed on a surface of an anodized oxide layer formed by anodizing a surface of a substrate of said component and substantially made of fluoride generated by performing fluorination processing of said surface of said anodized oxide layer.

17. The heat exchanger as recited in claim 1, wherein said fluoride layer is formed on a surface of a plated layer containing nickel formed on a surface of a substrate of said component and substantially made of fluoride generated by performing fluorination processing of said surface of said plated layer.

18. The heat exchanger as recited in claim 17, wherein said plated layer is substantially made of electroless nickel plating.

19. The heat exchanger as recited in claim 17, wherein said plated layer is substantially made of electroless nickel-phosphorus alloy plated layer.

20. The heat exchanger as recited in claim 1, wherein said fluoride layer is formed on a surface of a plated layer constituting an intermediate layer including an anodized oxide layer formed by anodizing a surface of a substrate of said component and said plated layer formed on a surface of said anodized oxide layer and containing nickel, and substantially made of fluoride generated by performing fluorination processing of said surface of said plated layer.

21. The heat exchanger as recited in claim 20, wherein said plated layer is substantially made of electroless nickel plating.

22. The heat exchanger as recited in claim 20, wherein said plated layer is substantially made of electroless nickel-phosphorus alloy plating.

23. A method of fluorinating a heat exchanger or its component, comprising:
heating a heat exchanger or its component in an atmosphere containing a fluorination processing gas to thereby form a fluoride layer in a surface layer portion of said heat exchanger or its component.

24. The method of fluorinating a heat exchanger or its component as recited in claim 23, wherein said fluorination processing gas is at least one gas selected from the group consisting of a fluorine gas, a chlorine trifluoride gas and a nitrogen fluoride gas, wherein an inert gas is used as a base gas of said atmosphere, and wherein concentration of said fluorine gas or that of said fluoride gas is set so as to fall within the range of from 5 to 80 mass%.

25. The method of fluorinating a heat exchanger or its component as recited in claim 24, wherein said concentration of said fluorine gas or that of said fluoride gas is set so as to fall within the range of from 10 to 60 mass%.

26. The method of fluorinating a heat exchanger or its component as recited in claim 23, wherein said heating is performed under a heat processing condition that a holding temperature is 100 °C or more and a holding time is 5 hours or more.

27. A method of fluorinating a heat exchanger or its component, comprising:
implanting an ionized fluorine into at least a part of a surface of a heat exchanger or its component to thereby form a fluoride layer on a surface layer portion of said heat exchanger or its component.

28. A method of manufacturing a heat exchanger, comprising:
a heating step for heating a heat exchanger component in an atmosphere containing a fluorination processing gas; and
a fixing step for fixing said component processed by said heating step to a predetermined position of a desired heat exchanger.

29. The method of manufacturing a heat exchanger as recited in claim 28, further comprising a catalyst containing layer forming step for forming a layer containing catalyst on a surface of said component processed by said heating step.

30. A method of manufacturing a heat exchanger, comprising:
a fluorine implanting step for implanting an ionized fluorine into at least a part of a surface of a heat exchanger component; and
a fixing step for fixing said component processed by said fluorine implanting step to a predetermined position of a desired heat exchanger.

31. The method of manufacturing a heat exchanger according to claim 30, further comprising a catalyst containing layer forming step for forming a layer containing catalyst on a portion of said surface of said component processed by said fluorine implanting step to which said fluorine is implanted.

32. A method of manufacturing a heat exchanger, comprising:
a heating step for heating a heat exchanger assembly in an atmosphere containing a fluorination processing gas, wherein said heat exchanger assembly is formed by assembling a plurality of heat exchanger components and integrally brazing said plurality of heat exchanger components in an assembled state.

33. The method of manufacturing a heat exchanger as recited in claim 32, further comprising a catalyst containing layer forming step for forming a layer containing catalyst on a surface of said assembly processed by said heating step.

34. A method of manufacturing a heat exchanger, comprising:
a fluorine implanting step for implanting an ionized fluorine into at least a part of a surface of a heat exchanger assembly, wherein said heat exchanger assembly is formed by assembling a plurality of heat exchanger components and integrally brazing said plurality of heat exchanger components in an assembled state.

35. The method of manufacturing a heat exchanger as recited in claim 34, further comprising a catalyst containing layer forming step for forming a layer containing catalyst on a portion of said surface of said assembly processed by said fluorine implanting step to which said fluorine is implanted.
